# EUROPÄISCHE PATENTANMELDUNG

(11) **EP 2 450 584 A2**
(43) Veröffentlichungstag der Anmeldung: **09.05.2012**
(21) Anmeldenummer: 11175724.1
(22) Anmeldetag: 28.07.2011
(51) Int. Cl.: F16C 19/38, F16C 19/49

(54) **Lageranordnung für eine Welle**

(30) Priorität: 05.11.2010 DE 102010050602
(71) Anmelder: Schaeffler Technologies AG & Co. KG, 91074 Herzogenaurach (DE)
(72) Erfinder: Besenbeck, Kurt, 91074 Herzogenaurach (DE); Bohr, Andreas-Johann, 91074 Herzogenaurach (DE); Seis, Markus, 90489 Nürnberg (DE)

(57) **Zusammenfassung**

Die Erfindung betrifft eine Lageranordnung für eine im Wesentlichen radial und überwiegend einseitig axial belasteten Welle in einem Getriebegehäuse, insbesondere für eine Ritzelwelle in einem Differentialgetriebe für Kraftfahrzeuge, mit axial voneinander beabstandeten, unterschiedlich ausgebildeten, axial vorgespannten, käfiggeführten Wälzkörperreihen (10, 12) in 0-Anordnung, die auf äußeren und inneren Laufbahnen (2, 3; 6, 8) abrollen, wovon die äußeren Laufbahnen (2, 3) in eine ungeteilte, äußere Hülse (1) eingearbeitet sind.

Um eine genau definierte Lagervorspannung, die im Wesentlichen temperaturunabhängig ist, zu erreichen, die Montage zu erleichtern und die innere Reibung zu vermindern, ist erfindungsgemäß vorgesehen, dass die inneren Laufbahnen (6, 8; 8, 25; 8, 27; 8, 32; 8, 39) in eine innere, auf der Welle angeordnete, ungeteilte Hülse (5; 24; 31) oder direkt in die Welle (14; 26; 38) eingearbeitet sind, dass eine der Wälzkörperreihen eine die axiale Vorspannung aufbringende Schräg-Kugelrollenreihe (12) ist, und dass die andere(n), axial beabstan-dete(n), die Axiallast aufnehmende Wälzkörperreihe(n) eine Kegelrollenreihe (10) oder zweireihige Tandem-Schrägkugelreihen (20, 22) oder zweireihige Tandem-Schrägkugelrollenreihen (34, 36) ist bzw. sind.

## Beschreibung

### Gebiet der Erfindung

Die Erfindung betrifft eine Lageranordnung für eine im Wesentlichen radial und überwiegend einseitig axial belasteten Welle in einem Getriebegehäuse, insbesondere für eine Ritzelwelle in einem Differentialgetriebe für Kraftfahrzeuge, mit axial voneinander beabstandeten, unterschiedlich ausgebildeten, axial vorgespannten, käfiggeführten Wälzkörperreihen in O-Anordnung, die auf äußeren und inneren Laufbahnen abrollen, wovon die äußeren Laufbahnen in einer ungeteilten, äußeren Hülse eingearbeitet sind.

### Hintergrund der Erfindung

Aus der DE 10 2004 020 851 A1 ist eine Lagerung einer Welle in einem Getriebe für ein Kraftfahrzeug bekannt, die über zwei aus einem Innenring und einem Außenring bestehende, voneinander beabstandete Wälzlager in einem Getriebegehäuse aufgenommen ist, wobei jedes der Wälzlager unterschiedlich ausgebildet ist. Das erste Lager kann als ein Kugellager ausgebildet sein, während das zweite Lager eine Kombination eines Zylinderrollenlagers mit einem Kugellager sein kann. Das erste Lager kann dabei als ein doppelreihiges Schrägkugellager ausgebildet sein, während das zweite Lager ein Schrägrollenlager sein kann. Bei dieser Ausführungsform ist der Außenring für die beiden Lager als ungeteilte Buchse ausgebildet, während der Innenring geteilt ist, um die Montage der Lager zu ermöglichen und um eine vorgegebene Vorspannung auf die Lagerung der Welle aufzubringen. Mit dieser bekannten Lagerung soll die Reibung vermindert, eine längere Laufdauer erreicht und die Montage vereinfacht werden. Auch Bauraum kann mit dieser Lagerung eingespart werden.

Aus der DE 198 39 481 A1 ist eine Lagerung für eine Kegelritzelwelle eines Verteilergetriebes eines Kraftfahrzeuges bekannt, bei der die Kegelritzelwelle in einem Gehäuse über zwei voneinander beabstandete, einseitig belastbare, zweireihige Tandem-Schrägkugellager gelagert ist, die zueinander in O-Anordnung angestellt sind. Auch mit dieser Lagerung sollen ein wesentlich geringeres Reibmoment und ein wesentlich geringerer Lagerverschleiß erreicht werden.

Lageranordnungen dieser Art erfordern es, dass bei der Montage in das Gehäuse und/oder auf die Ritzelwelle eine axiale Vorspannung zu erzeugen ist, die durch entsprechende Elemente, wie Schrauben, Federn usw. eingestellt wird. Dieses Einstellen der axialen Vorspannung unterliegt jedoch immer einer gewissen Streuung, so dass ein vorgegebener optimaler Vorspannungswert nicht genau einstellbar ist. Um eine vorgegebene Mindestvorspannung zu erhalten, muss die durchschnittliche Vorspannung auf einen Wert eingestellt werden, der mindestens um den Betrag der halben Streuung, resultierend aus dem Vorspannprozess, erhöht ist. Diese erhöhte Vorspannung führt zu einer höheren Reibung und Temperatur der Lagerung.

Die Lagerung einer Kegelritzelwelle gemäß der DE 198 39 481 A1 zeigt zwei voneinander beabstandete, einseitig belastbare, zweireihige Tandem-Schrägkugellager, deren Innenringe auf der Ritzelwelle gelagert sind, während die Außenringe in einem Getriebegehäuse angeordnet sind, das in der Regel aus einer Aluminiumlegierung besteht. Die vorgegebene Vorspannung wird mittels einer Mutter auf einen der Innenringe aufgebracht, der sich über eine gewellte Hülse an einem Absatz der Kegelritzelwelle abstützt. Die elastische Verformung der Hülse bestimmt dabei die Vorspannkraft der Lagerung. Da Aluminiumlegierungen einen größeren Wärmeausdehnungskoeffizienten aufweisen als die für die Kegelritzelwelle und die Tandem-Schrägkugellager verwendeten Stahllegierungen, führt die Erwärmung der Bauteile zu einer Zunahme der Lagervorspannung und damit zu erhöhter Reibung und Erwärmung.

Dieser Nachteil wird bei der Lagerung gemäß der DE 10 2004 020 851 A1 zwar vermieden, da der Außenring als Buchse mit eingearbeiteten Laufbahnen für die Wälzlager hergestellt ist, so dass sich eine unterschiedliche Wärmedehnung eines Gehäuses aus einer Aluminiumlegierung nicht auf die Lagerung auswirken kann. Jedoch erfordert diese Lagerung eine aufwendige Einstellung der vorgegebenen Lagervorspannung durch Anstellen der Lagerinnenringe gegeneinander oder durch Abpassen des geteilten Innenrings gegenüber dem als Hülse ausgebildeten Außenring. Dies bedeutet einen erhöhten Montageaufwand, auch weil die aus den vorgenannten Druckschriften bekannten Lagerungen nicht selbsthaltend sind, weswegen während der Montage darauf zu achten ist, dass die Baueinheit nicht in ihre Bestandteile zerfällt, wofür eine achtsame Handhabung durch das Montagepersonal nötig ist. Bei abgepassten Lagern ist zusätzlich darauf zu achten, dass nur zueinander abgepasste Lager in einer Lagerung verbaut werden, da die Funktion der Lagerung nicht sichergestellt ist, wenn nicht abgepasste Lagerbestandteile miteinander kombiniert werden.

### Aufgabe der Erfindung

Vor diesem Hintergrund liegt der Erfindung die Aufgabe zugrunde, eine Lageranordnung vorzuschlagen, mit der es möglich ist, eine genaue, definierte und nahezu temperaturunabhängige Vorspannung unabhängig vom Gehäusematerial aufzubringen, die Montage zu erleichtern, die Handhabung zu vereinfachen und eine Verwechslungsgefahr von Lagerbestandteilen zu vermeiden.

### Beschreibung der Erfindung

Ausgehend von einer Lageranordnung für eine im Wesentlichen radial und überwiegend einseitig axial belasteten Welle in einem Getriebegehäuse, insbesondere für eine Ritzelwelle in einem Differentialgetriebe für Kraftfahrzeuge, mit axial voneinander beabstandeten, unterschiedlich ausgebildeten, axial vorgespannten, käfiggeführten Wälzkörperreihen in O-Anordnung, die auf äußeren und inneren Laufbahnen abrollen, wovon die äußeren Laufbahnen in einer ungeteilten, äußeren Hülse eingearbeitet sind, der eingangs erwähnten Art, besteht die erfindungsgemäße Lösung der Aufgabe darin, dass die inneren Laufbahnen in eine innere, auf der Welle angeordneten, ungeteilten Hülse oder direkt in die Welle eingearbeitet sind, dass eine der Wälzkörperreihen eine die axiale Vorspannung aufbringende Schrägkugelrollenreihe ist, und dass die andere(n), axial beabstandete(n), die Axiallast aufnehmende(n) Wälzkörperreihe(n), eine Kegelrollenreihe ist oder zweireihige Tandem-Schrägkugelreihen oder zweireihige Tandem-Schrägkugelrollenreihen sind.

Die Lageranordnung gemäß der Erfindung ist als eine Art Lagerkassette anzusehen, die als selbsthaltende Baueinheit ausgebildet ist, wobei alle Bestandteile aus Stahllegierungen mit demselben thermischen Ausdehnungskoeffizienten bestehen.

Um die vorgegebene Lagervorspannung zu erreichen, sind die axialen Abstände der äußeren Laufbahnen in der ungeteilten äußeren Hülse und die axialen Abstände der inneren Laufbahnen auf der inneren Hülse oder auf der Welle so bemessen und aneinander angepasst, dass nach dem Zusammenbau eine vorgegebene axiale Vorspannung der Lageranordnung erreicht wird.

Insbesondere können die axialen Abstände der äußeren Laufbahnen in der ungeteilten äußeren Hülse und die axialen Abstände der inneren Laufbahnen auf der inneren Hülse oder auf der Welle so bemessen und aneinander angepasst sein, dass nach dem Zusammenbau und dem Einpressen der Hülse in das Getriebegehäuse und/oder dem Aufpressen der inneren Hülse auf die Welle eine vorgegebene, axiale Vorspannung und/oder ein vorgegebener Druckwinkel der Schrägkugelrollenreihen und/oder der Schrägkugelreihen erreicht wird.

Die Laufbahnen und die Tandem-Wälzkörperreihen können unterschiedliche Durchmesser aufweisen.

Vorzugsweise können die Lagerkäfige der zuerst zu montierenden Wälzkörperreihen als Fensterkäfige und der Lagerkäfig der zuletzt zu montierenden Wälzkörperreihe als Kammkäfig ausgebildet sein.

Die Montage der erfindungsgemäß ausgebildeten Lageranordnung erfolgt derart, dass zunächst der oder die vorzugsweise als Kunststofffensterkäfig ausgebildeten Lagerkäfige für die zuerst zu montierenden Wälzkörperreihen auf die Innenlaufbahn oder die Innenlaufbahnen der inneren Hülse oder der Welle aufgeschoben und mit den Wälzkörpern befüllt werden. Anschließend wird die äußere Hülse auf diese Reihen Wälzkörper aufgeschoben. Danach werden die Kugelrollen axial liegend durch den Abstand zwischen der äußeren Hülse und der inneren Hülse bzw. der Welle hindurch in ihre Laufbahnen eingefüllt, um etwa 120° verschwenkt und gleichmäßig in Umfangsrichtung verteilt. Abschließend wird der als Kunststoffkammkäfig ausgebildete Lagerkäfig auf die Kugelrollen aufgeschnappt.

Die notwendige Vorspannung zwischen den Wälzkörperreihen lässt sich dadurch in die Lageranordnung einbringen, dass die maßgenau ausgebildete äußere Hülse unter Ausnutzung der Elastizität aller Lagerteile nach dem Aufschieben auf die erste Reihe der Wälzkörper derart axial gegen die innere Hülse oder die Welle verspannt wird, dass genügend Montageraum zum Einfüllen der Kugelrollen der zweiten Reihe in ihre Laufbahnen zum Verschwenken um etwa 120° zur Verfügung steht, so dass nach dem Aufheben der axialen Verspannung der äußeren Hülse nach der Montage der Kugelrollen die Vorspannung in der Lageranordnung entsteht.

Es ergibt sich somit, dass sich die erforderliche Vorspannung in der Lageranordnung dadurch erreichen lässt, dass die axialen Abstände der Laufbahnen an der äußeren Hülse und an der inneren Hülse bzw. der Welle aufeinander abgestimmt werden. Des Weiteren lässt sich eine Änderung der Druckwinkel der Tandem-Schrägkugelreihen bzw. der Tandem-Schrägkugelrollenreihen und der axial beabstandeten Schrägkugelrollenreihe sowie auch die Vorspannung der Lageranordnung durch das Einengen der äußeren Hülse beim Einpressen in das Gehäuse bzw. durch die Aufweitung der inneren Hülse beim Aufpressen auf die Welle erreichen.

Weiter kann vorgesehen sein, dass die äußere Hülse und die innere Hülse bzw. die Welle bei der Montage der zuletzt zu montierenden Wälzkörperreihe, also der Kugelrollen, einen vergleichsweise großem Temperaturunterschied aufweisen, aufgrund dessen die äußere Hülse und die innere Hülse bzw. Welle einen größeren radialen Abstand zueinander haben als bei gleichen Bauteiltemperaturen. Die Temperaturdifferenz ist derart einzustellen, dass die äußere Hülse eine höhere Temperatur aufweist als die Welle bzw. die Innenhülse. Dies kann sowohl durch eine Erwärmung der äußeren Hülse auf eine Temperatur unterhalb einer thermischen Beeinflussung ihrer Werkstoffeigenschaften, als auch durch eine Abkühlung der inneren Hülse bzw. Welle erfolgen, beziehungsweise durch eine Kombination der Vorgehensweisen. Der dadurch entstehende größere radiale Abstand erleichtert die Montage der Wälzkörper. Sobald die äußeren Hülse und die inneren Hülse bzw. die Welle wieder die gleiche Temperatur aufweisen, stellt sich die gewünschte Vorspannung aufgrund der gewählten axialen Abstände der Laufbahnen zwischen den Wälzkörperreihen wie oben erläutert ein.

Da alle sich im Kraftfluss der Vorspannung befindlichen Bauteile der erfindungsgemäßen Lageranordnung aus gleichartigen Werkstoffen, vorzugsweise Wälzlagerstahl, hergestellt werden, ergibt sich eine Unabhängigkeit der Vorspannung von der jeweiligen Bauteil- bzw. Getriebegehäusetemperatur. Die axiale Sicherung der Lagerung, wenn sie als Baueinheit aus einer äußeren Hülse und einer inneren Hülse besteht, kann in bekannter Weise mittels einer axial wirkenden Mutter erfolgen, wobei das Anzugsmoment der Mutter keinen bzw. fast keinen Einfluss auf die axiale Vorspannung hat. Dementsprechend ist eine Überwachung des Anzugsmoments der Mutter für die Erzeugung einer vorgegebenen Vorspannung nicht mehr nötig. Selbstverständlich lässt sich die Sicherung der axialen Lage der Lageranordnung auf der Welle auch auf andere Weise durchführen, beispielsweise mittels eines Sicherungsrings.

Die erfindungsgemäße Lageranordnung ergibt eine sehr genau definierte axiale Vorspannung, die dadurch im Vergleich zum Stand der Technik kleiner sein kann. Dadurch werden die Reibungen vermindert sowie ein geringerer Verbrauch und damit eine Verminderung des CO₂-Ausstoßes bei Kraftfahrzeugen erreicht. Vorteilhaft ist auch, dass die erfindungsgemäße Lageranordnung als Baueinheit selbsthaltend ist, was zu einer Montageerleichterung führt und Verwechslungsgefahren beim Einbau der Bauelemente vermeidet.

### Kurze Beschreibung der Zeichnungen

Die erfindungsgemäß ausgebildete Lageranordnung wird nachfolgend in mehreren bevorzugten Ausführungsformen unter Bezugnahme auf die beigefügten Zeichnungen näher erläutert. Dabei zeigen:
- Figur 1: eine Schnittdarstellung einer erfindungsgemäßen Lageranordnung gemäß einer ersten Ausführungsform in Form einer Baueinheit aus einer äußeren Hülse, einer inneren Hülse und dazwischen angeordneten Wälzkörperreihen;
- Figur 2: eine Schnittdarstellung einer erfindungsgemäßen Lageranordnung gemäß einer zweiten Ausführungsform mit einer äußeren Hülse und einer mit Laufbahnen versehenen Welle;
- Figur 3: eine Schnittdarstellung einer erfindungsgemäßen Lageranordnung mit einer äußeren Hülse und einer inneren Hülse mit einer zweireihigen Tandem-Schrägkugelreihe und einer axial beabstandeten Schrägkugelrollenreihe;
- Figur 4: eine Schnittansicht einer Lageranordnung ähnlich Figur 3 mit einer Welle anstelle der inneren Hülse;
- Figur 5: eine Schnittansicht einer erfindungsgemäßen Lageranordnung gemäß einer Ausführungsform mit einer zweireihigen Tandem-Schrägkugelrollenreihe und einer axial beabstandeten Schräg- kugelrollenreihe in einer äußeren Hülse und einer inneren Hülse;
- Figur 6: eine Schnittansicht einer Ausführungsform ähnlich Figur 5 mit einer Welle anstatt einer inneren Hülse.

### Ausführliche Beschreibung der Zeichnungen

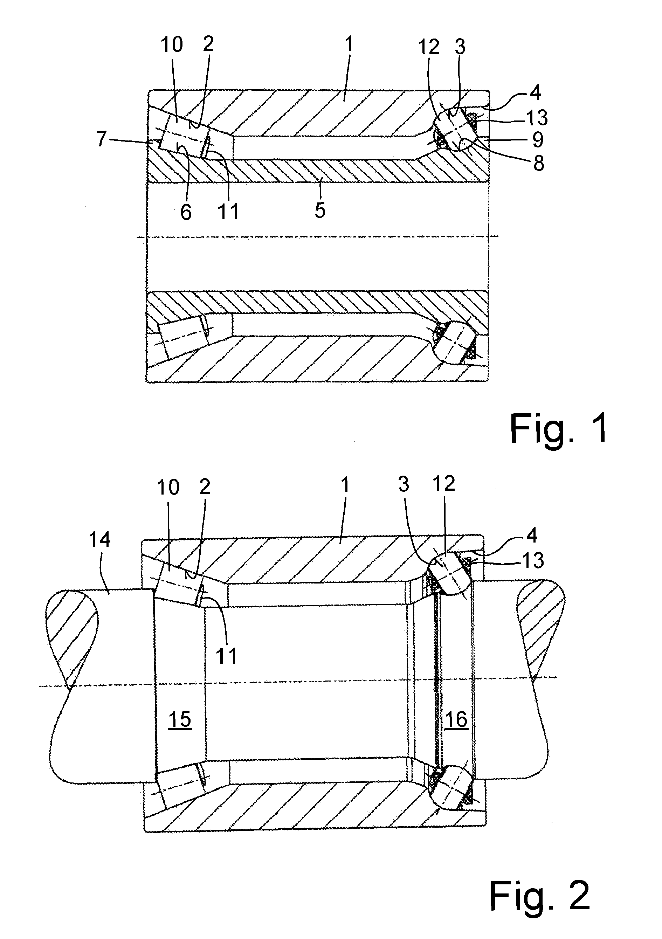

In Figur 1 ist eine selbsthaltende Lageranordnung dargestellt. Sie besteht aus einer äußeren Hülse 1 mit einer kegeligen Laufbahn 2 und einer rillenförmigen Laufbahn 3, welche über einen ebenen Auslauf 4 aus der äußeren Hülse 1 herausgeführt ist, und einer inneren Hülse 5 mit einer durch einen Bord 7 begrenzten kegeligen Laufbahn 6 sowie einer durch eine Schulter 9 begrenzten rillenförmigen Laufbahn 8, wobei zwischen den beiden Hülsen 1, 5 eine Kegelrollenreihe 10 und eine Kugelrollenreihe 12 in O-Anordnung angeordnet sowie durch einen Fensterkäfig 11 und einen Kammkäfig 13 geführt sind. Die Käfige bestehen vorzugsweise aus einem Kunststoff.

Die äußere Hülse 1 ist in einem nicht dargestellten Getriebegehäuse angeordnet, während die innere Hülse 5 auf einer nicht dargestellten Welle, insbesondere einer Ritzelwelle in einem Differentialgetriebe für Kraftfahrzeuge angeordnet ist.

Wie eingangs beschrieben, ergibt sich die axiale Vorspannung dieser Lageranordnung aus den axialen Abständen der kegeligen Laufbahn 2 und der rillenförmigen Laufbahn 3 in der äußeren Hülse 1 sowie der kegeligen Laufbahn 6 und der rillenförmigen Laufbahn 8 in der inneren Hülse 5, nachdem die Kegelrollenreihe 10 sowie die Kugelrollenreihe 12 in O-Anordnung montiert sind und die Kugelrollenreihe 12 den andeutungsweise gezeigten Druckwinkel einnimmt.

Die Ausführungsform gemäß Figur 2 unterscheidet sich von der Ausführungsform gemäß Figur 1 dadurch, dass anstelle der inneren Hülse 5 mit den Laufbahnen 6, 8 eine Welle 14 mit einer kegeligen Laufbahn 15 und einer rillenförmigen Laufbahn 16 direkt über die Kegelrollenreihe 10 und die Kugelrollenreihe 12 in der äußeren Hülse 1 geführt ist.

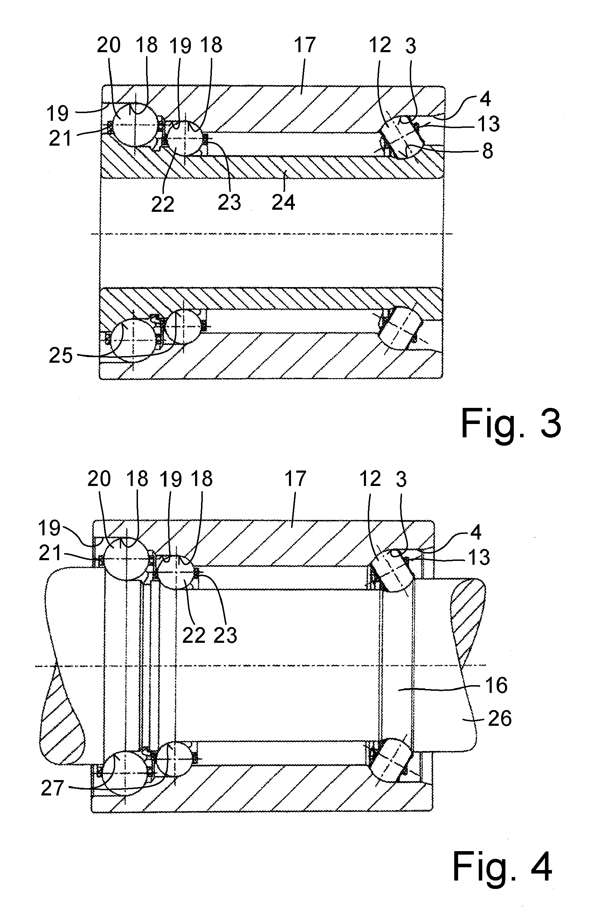

Bei der Ausführungsform gemäß Figur 3 ist die Kegelrollenreihe 10 gemäß den Figuren 1 und 2 durch eine zweireihige Tandem-Schrägkugelreihe 20, 22 ersetzt. Die Kugeln der Schrägkugelreihe 20 haben einen größeren Durchmesser als die Kugeln der Schrägkugelreihe 22. Die Kugeln der Schrägkugelreihen 20 rollen auf rillenförmigen Laufbahnen 18 der äußeren Hülse 17 und auf rillenförmigen Laufbahnen 25 der inneren Hülse 24 ab, die einen größeren Durchmesser aufweisen, als die Laufbahnen 18 und 25 der Schrägkugelreihe 22.

Die Kugeln der Kugelreihe 20 sind in einem Fensterkäfig 21 und die Kugeln der Kugelreihe 22 in einem Fensterkäfig 23, welche vorzugsweise aus Kunststoff bestehen, geführt. Die axial beabstandete Kugelrollenreihe 12 entspricht der Kugelrollenreihe 12 in den Figuren 1 und 2 und trägt dementsprechend die gleichen Bezugsziffern. Um die äußere Hülse 17 nach der Montage der Schrägkugelreihen 20, 22 und ihrer Käfige 21, 23 über die innere Hülse 24 schieben zu können, gehen die Laufbahnen 18 in der äußeren Hülse 17 in ebene Ausläufe über.

Die Ausführungsform gemäß Figur 4 entspricht weitgehend der Ausführungsform gemäß Figur 3, wobei die innere Hülse 24 durch eine Welle 26 ersetzt ist, die mit rillenförmigen Laufbahnen 16 für die Kugelrollenreihe 12 und mit rillenförmigen Laufbahnen 27 für die Schrägkugelrollenreihen 20, 22 versehen ist.

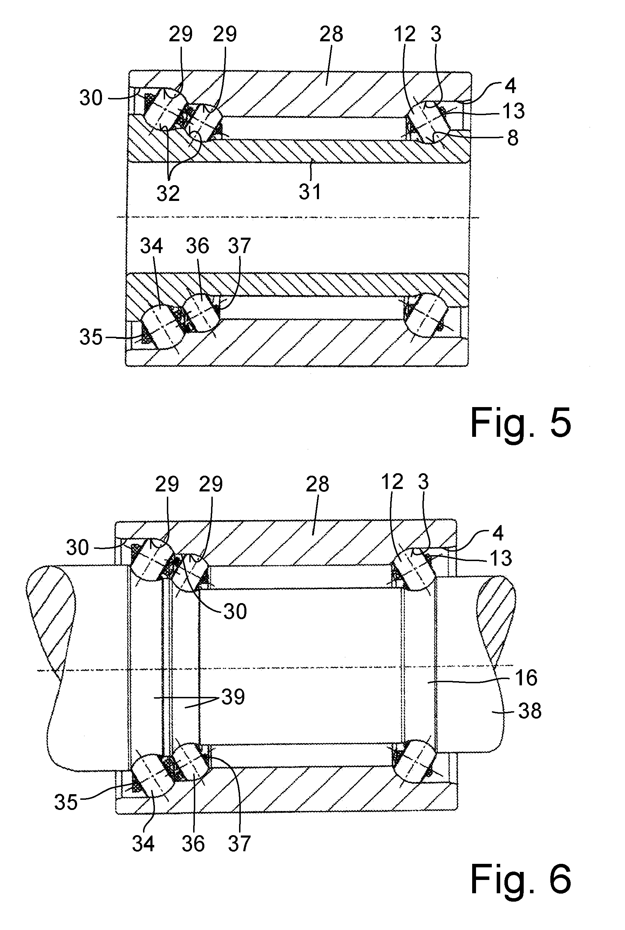

Bei der Ausführungsform gemäß Figur 5 sind die Schrägkugelreihen 20, 22 gemäß Figur 3 durch Tandem-Schrägkugelrollenreihen 34, 36 ersetzt. Die äußere Hülse 28 weist dementsprechend rillenförmige Laufbahnen 29 unterschiedlichen Durchmessers für Tandem-Schrägkugelrollenreihen 34, 36 und eine rillenförmige Laufbahn 3 für die axial beabstandete Schräg-Kugelrollenreihe 12 auf. Die rillenförmige Laufbahn 3 und die rillenförmigen Laufbahnen 29 sind mit ebenen Ausläufen 4 bzw. 30 versehen.

Die innere Hülse 31 weist für die Tandem-Schrägkugelrollenreihen 34, 36 rillenförmige Laufbahnen 32 und für die Schräg-Kugelrollenreihe 12 eine rillenförmige Laufbahn 8 auf.

Figur 6 entspricht den Figuren 2 und 4 mit einer die innere Hülse 31 ersetzenden Welle 38, die mit rillenförmigen Laufbahnen 39 für die Tandem-Schrägkugelrollenreihen 34, 36 und einer rillenförmigen Laufbahn 16 für die Schräg-Kugelrollenreihe 12 versehen ist.

Bei allen Ausführungsformen erfolgt die Montage in der eingangs erwähnten Art, in dem die zuerst zu montierenden Wälzkörperreihen 10; 20, 22; 34, 36 mit ihren Käfigen 11; 21, 23; 35, 37 auf den inneren Hülsen 5, 24, 31 bzw. den Wellen 14, 26, 38 montiert werden, dann die äußeren Hülsen 1, 17, 28 aufgeschoben und unter axialer Vorspannung gesetzt werden, wonach dann die Rollen der Schräg-Kugelrollenreihe 12 durch den Spalt zwischen dem ebenen Auslauf 4 und der Schulter 9 waagerecht liegend eingeführt und um mehr als 90°, vorzugsweise bis zu 120°, gekippt und dann durch den Kammkäfig 13 in ihrer Lage gehalten werden. Nach Aufhebung der axialen Belastung der äußeren Hülse 1, 17, 28 ergibt sich die im Wesentlichen unveränderliche und von thermischen Einflüssen unabhängige axiale Vorspannung der erfindungsgemäßen Lageranordnung.

### Bezugszahlenliste

- 1: Äußere Hülse
- 2: Kegelige Laufbahn
- 3: Rillenförmige Laufbahn
- 4: Ebener Auslauf
- 5: Innere Hülse
- 6: Kegelige Laufbahn
- 7: Bord
- 8: Rillenförmige Laufbahn
- 9: Schulter
- 10: Kegelrollenreihe
- 11: Fensterkäfig
- 12: Schrägkugelrollenreihe
- 13: Kammkäfig
- 14: Welle
- 15: Kegelige Laufbahn
- 16: Rillenförmige Laufbahn
- 17: Äußere Hülse
- 18: Rillenförmige Laufbahn
- 19: Ebener Auslauf
- 20: Schrägkugelreihe
- 21: Käfig
- 22: Schrägkugelreihe
- 23: Käfig
- 24: Innere Hülse
- 25: Rillenförmige Laufbahn
- 26: Welle
- 27: Rillenförmige Laufbahn
- 28: Äußere Hülse
- 29: Rillenförmige Laufbahn
- 30: Ebener Auslauf
- 31: Innere Hülse
- 32: Rillenförmige Laufbahn
- 34: Kugelrollenreihe
- 35: Fensterkäfig
- 36: Kugelrollenreihe
- 37: Fensterkäfig
- 38: Welle
- 39: Rillenförmige Laufbahnen

## Patentansprüche

1. Lageranordnung für eine im Wesentlichen radial und überwiegend einseitig axial belastete Welle in einem Getriebegehäuse, insbesondere für eine Ritzelwelle in einem Differentialgetriebe für Kraftfahrzeuge, mit axial voneinander beabstandeten, unterschiedlich ausgebildeten, axial vorgespannten, käfiggeführten Wälzkörperreihen (10, 12; 20, 22, 12; 34, 36, 12) in O-Anordnung, die auf äußeren und inneren Laufbahnen (2, 3; 6, 8; 3, 18, 8, 25; 3, 29, 8, 32) abrollen, wovon die äußeren Laufbahnen (2, 3; 3, 18; 3, 29) in einer ungeteilten, äußeren Hülse (1; 17; 28) eingearbeitet sind, **dadurch gekennzeichnet, dass** die inneren Laufbahnen (6, 8; 8, 25; 8, 27; 8, 32; 8, 39) in eine innere, auf der Welle angeordnete, ungeteilte Hülse (5; 24; 31) oder direkt in die Welle (14; 26; 38) eingearbeitet sind, dass eine der Wälzkörperreihen eine die axiale Vorspannung aufbringende Schräg-Kugelrollenreihe (12) ist, und dass die andere(n), axial beabstandete(n), die Axiallast aufnehmende Wälzkörperreihe(n) eine Kegelrollenreihe (10) oder zweireihige Tandem-Schrägkugelreihen (20, 22) oder zweireihige Tandem-Schräg-Kugelrollenreihen (34, 36) ist bzw. sind.

2. Lageranordnung nach Anspruch 1, **dadurch gekennzeichnet, dass** die axialen Abstände der äußeren Laufbahnen (2, 3; 3, 18; 3, 29) in der ungeteilten äußeren Hülse (1; 17; 28) und die axialen Abstände der inneren Laufbahnen (6, 8; 15, 16; 8, 25; 16, 27; 8, 32; 16, 39) auf der inneren Hülse (5; 24; 31) oder auf der Welle (14, 26, 38) so bemessen und aneinander angepasst sind, dass nach dem Zusammenbau eine vorgegebene axiale Vorspannung der Lageranordnung erreicht wird.

3. Lageranordnung nach Anspruch 1 oder 2, **dadurch gekennzeichnet, dass** die axialen Abstände der äußeren Laufbahnen (2, 3; 3, 18; 3, 29) in der ungeteilten äußeren Hülse (1; 17; 28) und die axialen Abstände der inneren Laufbahnen (6, 8; 15, 16; 8, 25; 16, 27) auf der inneren Hülse (5; 24; 31) oder auf der Welle (14; 26; 38) so bemessen und aneinander angepasst sind, dass nach dem Zusammenbau und dem Einpressen der Hülse (1; 17; 28) in das Getriebegehäuse und/oder dem Aufpressen der inneren Hülse (5; 24; 31) auf die Welle eine vorgegebene, axiale Vorspannung und/oder ein vorgegebener Druckwinkel der Schräg-Kugelrollenreihen (12, 34, 36) und/oder der Schrägkugelreihen (20, 22) erreicht wird.

4. Lageranordnung nach einem der Ansprüche 1 bis 3, **dadurch gekennzeichnet, dass** alle sich im Kraftfluss der axialen Vorspannung befindlichen Bauteile aus Werkstoffen mit dem gleichen thermischen Ausdehnungskoeffizienten bestehen.

5. Lageranordnung nach einem der Ansprüche 1 bis 4, **dadurch gekennzeichnet, dass** die Laufbahnen (18, 25, 27, 29, 32) und die Tandem-Wälzkörperreihen (20, 22, 34, 36) unterschiedliche Durchmesser aufweisen.

6. Lageranordnung nach einem der Ansprüche 1 bis 5, **dadurch gekennzeichnet, dass** die Lagerkäfige (11, 21, 23, 35, 37) der zuerst zu montierenden Wälzkörperreihen (10; 20; 22; 34, 36) als Fensterkäfige und der Lagerkäfig (13) der zuletzt zu montierenden Wälzkörperreihe (12) als Kammkäfig ausgebildet sind.
